# EUROPÄISCHE PATENTANMELDUNG

(11) **EP 3 910 311 A1**
(43) Veröffentlichungstag der Anmeldung: **17.11.2021**
(21) Anmeldenummer: 21173652.5
(22) Anmeldetag: 12.05.2021
(51) Int. Cl.: G01N 1/00, G01N 21/90

(54) **VORRICHTUNG UND VERFAHREN ZUM UNTERSUCHEN VON BEHÄLTERN AUF FREMDSTOFFE**

(30) Priorität: 15.05.2020 DE 102020206159
(71) Anmelder: Krieg, Gunther, 76227 Karlsruhe (DE)
(72) Erfinder: Vollmer, Marc, 77704 Oberkirch (DE); Bohleber, Jürgen, 77815 Bühl (DE); Fey, Dirk, 67630 Neewiller (FR)
(74) Vertreter: Ullrich & Naumann PartG mbB

(57) **Zusammenfassung**

Die Erfindung betrifft eine Vorrichtung zum Untersuchen von Behältern auf Fremdstoffe, umfassend eine Einbringeinrichtung zum Einbringen eines Neutralfluids in den Behälter,
eine Entnahmeeinrichtung zur Entnahme einer Fluidprobe aus zumindest einem Behälter, wobei die Entnahmeeinrichtung einen Probenahmekopf aufweist, wobei der Probenahmekopf kontaktlos in eine definierte Entnahmeentfernung zu einer Öffnung des zumindest einen Behälters bringbar ist, und
eine Analyseeinrichtung, die mit der Entnahmeeinrichtung verbunden ist, und die ausgebildet ist, die mittels der Entnahmeeinrichtung aus dem zumindest einen Behälter entnommene Fluidprobe zumindest mittels UV-Spektroskopie auf Fremdstoffe zu analysieren.

## Beschreibung

Die vorliegende Erfindung betrifft eine Vorrichtung zum Untersuchen von Behältern auf Fremdstoffe.

Die Erfindung betrifft ferner ein Verfahren zum Untersuchen von Behältern auf Fremdstoffe.

Obwohl auf beliebige Behälter anwendbar, wird die vorliegende Erfindung in Bezug auf Flaschen erläutert.

Obwohl auf beliebigen Gebieten anwendbar, wird die vorliegende Erfindung in Bezug auf die Wiederverwendung beziehungsweise das Recycling von Behältern erläutert.

Obwohl auf beliebige Fremdstoffe anwendbar, wird die vorliegende Erfindung mit Bezug auf Benzin erläutert.

Das Recycling von Kunststoffen erfährt in letzter Zeit eine wachsende Bedeutung. Kunststoffmüll hat bereits eine erhebliche Auswirkung auf die Umwelt, sei es durch die Verschmutzung von Gewässern oder die immer weiter ansteigende Menge an Kunststoffmüll. Trotzdem erfreuen sich im Bereich der Getränkeindustrie Kunststoffflaschen nach wie vor großer Beliebtheit, nicht nur wegen ihres in Bezug auf Glasflaschen deutlich geringeren Gewichts, sondern auch wegen ihrer Robustheit. Mehrwegflaschen, also Flaschen, die im Laufe Ihres Lebens mehrfach, teilweise über 25 Mal, mit Getränken (wieder) befüllt und verkauft werden, werden dabei von Endverbrauchern auch zweckentfremdet benutzt. So werden Mehrwegkunststoffflaschen auch benutzt, um darin Öl, Benzin, Reinigungsmittel oder Ähnliches zwischenzeitlich aufzubewahren. Nichtsdestotrotz finden sich derart benutzte Flaschen auch im Recyclingkreislauf wieder. Da diese Flaschen jedoch die früher enthaltenen Fremdstoffe selbst nach entsprechendem Reinigen der Flasche zurückbehalten können, beispielsweise da gewisse Stoffe in den Kunststoff diffundieren können, dürfen diese Flaschen nicht mehr für Getränke beziehungsweise Lebensmittel weiterverwendet werden und müssen zuverlässig aussortiert werden. Bei einer Weiterverwendung würden die in den Kunststoff diffundierten Stoffe zu einer Geschmacksverfälschung bei Wiederbefüllung mit Mineralwasser oder Softdrinks durch eine Rückdiffusion führen.

Aus der DE 10 2004 048 146 A1 ist eine Vorrichtung zum Untersuchen von Behältern auf Fremdstoffe bekannt geworden. Hierbei wird über einen Probenahmekopf und über eine Druckluftlanze nach Aufsetzen des Probenahmekopfes auf eine Flasche gereinigte Luft eingeblasen. Über eine Entnahmeleitung kann dann Gas aus der Flasche entnommen werden und das entnommene Gas einem Analysesystem zur weiteren Untersuchung zugeführt werden.

Problematisch ist, dass grundsätzlich Flaschen nicht nur mit Fremdstoffen verunreinigt sein können, sondern auch physische Beschädigungen in Form von Löchern, Abbruchkanten oder dergleichen aufweisen, insbesondere im Bereich der Flaschenöffnung. Wird nun ein Probenahmekopf aufgesetzt und Druckluft eingeblasen, kann über derartige Beschädigungen beispielsweise Fremdluft in die Flasche gelangen und so das Messergebnis an dem entnommenen Gas verfälschen.

Die US 5,567,623 A zeigt ein Verfahren und ein System zum Untersuchen von Substanzen in Behältern, wie beispielsweise Glas- oder Plastikflaschen. Hierzu wird ein zweiteiliger Probenahmekopf verwendet, um einerseits einen Luftstoss in eine Flasche einzuleiten und andererseits eine Luftmenge im Bereich der Öffnung der Flasche außerhalb dieser zu detektieren. Die Luftmenge im Bereich außerhalb der Flasche wird über eine Entnahmeleitung einer Analyseeinheit zugeführt. Dort wird die zugeführte Luftmenge aufgeteilt und ein Teil bei Anwesenheit von Nickeloxid, ein anderer Teil bei Anwesenheit von keramischen Materialien, erhitzt. Die beiden Teile werden dann unterschiedlichen Detektoren zugeführt, die wiederum entsprechende Detektionssignale bereitstellen. Anhand der Signaldifferenz der beiden bereitgestellten Signale wird dann entschieden, welche Materialgruppe in der entnommenen Luftmenge vorliegt und letztlich, ob die Flasche aussortiert werden soll.

Nachteilig dabei ist, dass dabei jedoch der Probenahmekopf ein großes Volumen aufweist, gleichzeitig ist die Detektion aufwendig und teuer. Zudem kann der Probenahmekopf nur mit geringer Geschwindigkeit bewegt werden.

Weiterhin sind auch unterschiedliche Analyseverfahren zur Analyse von Fremdstoffen in Behältern bekannt geworden. So ist es bekannt geworden, einen Photoionisationsdetektor PID zu verwenden, welcher einen Teil des Gases in dem Behälter ionisiert und die ionisierten Moleküle durch einen als Folge fließenden elektrischen Strom nachweist. Der Nachteil dieses Verfahrens besteht darin, dass die Ionisierung unselektiv ist und daher auch eine Ionisierung von Proben von sogenannten Gut-Flaschen, insbesondere in Form von Headspace-Flaschen stattfindet, was zu einer Ausleitung und Vernichtung einer großen Anzahl von noch brauchbaren Flaschen und damit zu wirtschaftlichen Verlusten führen kann.

Weiterhin ist es bekannt geworden, Quadrupol-Massenspektrometer zu verwenden, die einen Molekularstrahl durch Expansion einer Gasprobe aus einer Flasche in ein Hochvakuum erzeugen, die Moleküle im Strahl zum Teil ionisieren und in einem Quadrupol-Feld bezüglich ihrer spezifischen Masse trennen und analysieren. Der Nachteil von Massenspektrometern besteht darin, dass sie bei sehr niedrigen Drücken im Hochvakuum von nur ca. 0,00005 mbar arbeiten müssen. Dementsprechend gering ist wegen der entsprechend geringen Molekül-Dichte die Treffer- beziehungsweise die lonisierungswahrscheinlichkeit der senkrecht den Molekularstrahl treffenden Elektronen, was eine reduzierte Sensitivität des Massenspektrometers zur Folge hat, beispielsweise im Vergleich zu Systemen, die bei Umgebungsdruck arbeiten. Ein Problem stellt ebenfalls auch die Erzeugung des ionisierenden Elektronenstrahls dar. Das dazu eingesetzte glühende Wolframband verglüht, sobald ein Druckanstieg, zum Beispiel durch Wassertröpfchen, aus einem Behälter in die Vakuum-Kammer gelangt. Folge sind lange Stillstandzeiten und hohe Kosten.

Weiterhin sind auch optische Systeme bekannt geworden, die auf der Absorption oder Fluoreszenz von Licht der kontaminierenden Moleküle von Fremdstoffen in einer Fluidprobe beruhen. Auf diesem Gebiet sind Systeme im infraroten Bereich zur Detektion von Kohlenwasserstoffen, Kohlendioxid-Laser für die Absorptionsmessung von Ammoniak oder auch Mikrowellen-Systeme im Gigahertz-Bereich bekannt geworden. Zur Detektion von polyzyklischen Aromaten, wie zum Beispiel Naphtalin, wird auch die optische Fluoreszenz herangezogen. Obwohl die optischen Systeme bei Atmosphärendruck betrieben werden können, das heißt, obwohl eine relativ hohe Dichte des zu untersuchenden Gases vorliegt und obwohl eine ausreichende Stoff-Selektivität durch die optische Spektralmessung der interessierenden gasförmigen Moleküle infolge der charakteristischen "Fingerabdrücke", engl. finger prints, erzielt wird, sind aufgrund der im infraroten und im Mikrowellen-Wellenlängenbereich vorliegenden kleinen optischen Wirkungsquerschnitte die erforderlichen Sensitivitäten für den Nachweis der Kontaminanten beziehungsweise Fremdstoffe nicht ausreichend, selbst bei hoher optischer Weglänge. Viele wichtige Kontaminanten, zum Beispiel Knoblauch, Trichloranisol, Schimmelpilze (diese können den sogenannten "Muff- oder Kellergeruch" verursachen), etc. können damit nicht nachgewiesen werden.

Eine Aufgabe der vorliegenden Erfindung ist es daher, die Zuverlässigkeit bei der Erkennung und die Anzahl von detektierbaren Fremdstoffen in Behältern zu erhöhen, ohne den Herstellungsaufwand und die Kosten wesentlich zu vergrößern.

Die vorliegende Erfindung löst die vorstehend genannte Aufgabe bei einer Vorrichtung zum Untersuchen von Behältern auf Fremdstoffe, umfassend
eine Einbringeinrichtung zum Einbringen eines Neutralfluids in den Behälter,
eine Entnahmeeinrichtung zur Entnahme einer Fluidprobe aus zumindest einem Behälter, wobei die Entnahmeeinrichtung einen Probenahmekopf aufweist, wobei der Probenahmekopf kontaktlos in eine definierte Entnahmeentfernung zu einer Öffnung des zumindest einen Behälters bringbar ist, und
eine Analyseeinrichtung, die mit der Entnahmeeinrichtung verbunden ist, und die ausgebildet ist, die mittels der Entnahmeeinrichtung aus dem zumindest einen Behälter entnommene Fluidprobe zumindest mittels UV-Spektroskopie auf Fremdstoffe zu analysieren.

Die vorliegende Erfindung löst die vorstehende Aufgabe ebenfalls bei einem Verfahren zum Untersuchen von Behältern auf Fremdstoffe, umfassend die Schritte
- Einbringen eines Neutralfluids in den zumindest einen Behälter mittels einer Einbringeinrichtung,
- Entnehmen einer Fluidprobe aus dem zumindest einen Behälter mittels einer Entnahmevorrichtung, derart, dass der Probenahmekopf kontaktlos in eine definierte Entnahmeentfernung zu einer Öffnung des zumindest einen Behälters gebracht wird, und
- Analysieren der mittels der Entnahmeeinrichtung aus dem zumindest einen Behälter entnommene Fluidprobe zumindest mittels UV-Spektroskopie auf Fremdstoffe mittels einer Analyseeinrichtung.

Unter dem Begriff "Fremdstoff" ist jeglicher Stoff oder jegliches Stoffgemisch zu verstehen, der beziehungsweise das nicht zweckgemäß in Bezug auf den Behälter gebraucht oder eingesetzt wird. Beispielsweise ist bei einer Getränkekunststoffmehrwegflasche der bestimmungs- oder zweckgemäße Gebrauch der Flasche auf die Aufbewahrung von für Menschen ohne wesentliche Gesundheitsgefahren trinkbare Stoffe begrenzt. Fremdstoffe für Getränkekunststoffmehrwegflaschen sind beispielsweise Benzin, Diesel, Öl, Urin, Lacke, Salatdressings, Trichloranisol (TCA), Benzol, Ammoniak, Aceton, etc.

Unter dem Begriff "Neutralfluid" ist jegliches Fluid oder jegliche Fluidmischung zu verstehen, die zum einen das nachfolgende Messen und Analysieren der entnommenen Fluidprobe nicht verfälscht beziehungsweise verfälschen kann, zum anderen bei Einbringen derselben in den Behälter, sei es hinsichtlich seiner chemischen und/oder physikalischen Eigenschaften einerseits oder hinsichtlich der eingebrachten Menge oder Konzentration andererseits, keinen, insbesondere hinsichtlich der Wiederverwendung des Behälters entgegenstehenden Stoff darstellt. Mit anderen Worten kann der Behälter auch bei Einbringen einer Menge eines Neutralfluids seinem entsprechenden Zweck nach wiederverwendet werden.

Einer der mit der Erfindung erzielten Vorteile ist, dass eine kontaktlose und damit schnelle Probenahme bei gleichzeitig hoher Sensitivität der Fremdstoffdetektion bereitgestellt werden kann. Insbesondere wird hierbei die definierte Entnahmeentfernung, also im Wesentlichen der Abstand zwischen Probenahmekopf und Oberkante der Öffnung des Behälters minimiert, insbesondere bei der Verfolgung von Behältern während deren Transport entlang einer Transportrichtung. Damit kann eine Prüfgeschwindigkeit von bis zu 40.000-50.000 Flaschen pro Stunde bei günstiger Probenahme und genauer, also selektiver Analyse von Fremdstoffen bereitgestellt werden. Ein weiterer Vorteil ist der einfache und kostengünstige Aufbau der Vorrichtung beziehungsweise die einfache und kostengünstige Durchführung des Verfahrens.

Weitere Merkmale, Vorteile und bevorzugte Ausführungsformen der Erfindung sind in den folgenden Unteransprüchen beschrieben oder werden durch diese offenbar.

Gemäß einer vorteilhaften Weiterbildung ist eine Fördereinrichtung für die Behälter angeordnet, derart, dass die Bewegung des Probenahmekopfes und die Bewegung der Behälter miteinander synchronisierbar sind. Dabei kann beispielsweise die Bewegung von Probenahmekopf und Behälter elektronisch oder auch mechanisch synchronisiert werden. Hier kann beispielsweise bei einem separaten Antrieb für die Mitbewegung des Probenahmekopfes in bevorzugter Ausgestaltung eine elektronische Synchronisationseinrichtung angeordnet werden. Alternativ können bei einer lediglich getrieblichen Verbindung des Probenahmekopfes zum Antrieb der Fördereinrichtung für die Behälter, die Bewegung des Behälters und die Mitbewegung des Probenahmekopfes mechanisch, beispielsweise über ein Getriebe, synchronisiert werden. Damit kann auf einfache Weise eine zuverlässige Probenentnahme, insbesondere durch berührungsloses Mitführen des Probenahmekopfes "parallel", das heißt synchronisiert zu der Bewegung der Öffnung des Behälters erfolgen.

Gemäß einer weiteren vorteilhaften Weiterbildung ist die Einbringeinrichtung ausgebildet, das Neutralfluid in Form eines Gases oder Gasgemisches, insbesondere in Form von Luft bereitzustellen. In einer weiteren Ausführungsform kann das Gasgemisch auch im ppm-Bereich NH₃/N₂, SO₂/N₂ und/oder Propan/NH₃ aufweisen. Damit kann insbesondere eine Evaluierung der Messgenauigkeit der Analyseeinrichtung durchgeführt werden. Durch das Neutralfluid wird eine Fehldetektion auf Fremdstoffe bei der Untersuchung der Fluidprobe vermieden. Wird das Neutralfluid als Gas oder Gasgemisch bereitgestellt, wird eine einfache und kostengünstige Bereitstellung desselben ermöglicht. Beispielsweise kann einfach die Umgebungsluft unter Druck in den Behälter als Neutralfluid eingebracht werden.

Gemäß einer weiteren vorteilhaften Weiterbildung ist eine Sortiereinrichtung angeordnet, die ausgebildet ist, anhand eines Resultats der Analyseeinrichtung Behälter abweichend von einem vorab definierten Resultat auszusortieren. Damit können auf zuverlässige Weise Behälter, bei denen kein Resultat oder ein von einem vorab definierten Resultat abweichendes Resultat vorliegt, aussortiert werden. Das vorab definierte Resultat kann beispielsweise durch eine Vielzahl von Behältern in unterschiedlichen Restmengen und unterschiedlichen Fremdstoffen kalibriert werden, so dass durch Vergleich des hinterlegten Resultats mit dem gemessenen Resultat eine Aussortierung des entsprechenden Behälters möglich wird.

Gemäß einer weiteren vorteilhaften Weiterbildung ist die Sensoreinrichtung ausgebildet, die Behälter zumindest einmal erneut der Untersuchung auf Fremdstoffe zuzuführen. Damit kann beispielsweise dem Umstand Rechnung getragen werden, dass ein von dem vorab definierten Resultat abweichendes Resultat nicht notwendigerweise eine Aussortierung rechtfertigt. In diesem Fall wird der Behälter temporär aussortiert und später erneut auf Fremdstoffe untersucht. In bevorzugter Weise kann die Anzahl der erneuten Untersuchungen vorab festgelegt werden. Weicht das Resultat bei jeder oder einer vorab definierten Anzahl, Prozentsatz oder dergleichen der erneuten Untersuchungen weiterhin von dem vorab definierten Resultat ab, kann der Behälter endgültig aussortiert werden und beispielsweise entweder direkt aus dem Recycling von dem bestimmungsgemäßen Gebrauch des Behälters entfernt werden oder aber gegebenenfalls einer manuellen Kontrolle, etc. zugeführt werden.

Gemäß einer weiteren vorteilhaften Weiterbildung sind mehrere Behälter gleichzeitig untersuchbar und die jeweiligen Fluidproben unterschiedlicher Behälter gleichzeitig analysierbar. Dies ermöglicht eine äußerst schnelle und effiziente Untersuchung von Behältern. Der Begriff "gleichzeitig" in Bezug auf die Untersuchung auf Fremdstoffe ist insbesondere in der Beschreibung, vorzugsweise in den Ansprüchen derart zu verstehen, dass die Zeitdauer für zwei oder mehrere Untersuchungen auf Fremdstoffe unterschiedlicher Behälter so schnell erfolgt, dass diese für die Zeitdauer für die Bereitstellung weiterer Behälter im Wesentlichen unerheblich ist. Dies bedeutet insbesondere, dass eine "gleichzeitige" Untersuchung von Fluidproben auch eine sequentielle Analyse einzelner Fluidproben nacheinander beinhaltet, wobei die summierte Zeitdauer der Analyse wesentlich kleiner ist als das Bereitstellen weiterer neuer Behälter zur Untersuchung auf Fremdstoffe.

Gemäß einer weiteren vorteilhaften Weiterbildung weist der Probenahmekopf einen kegelförmigen Trichter zur Aufnahme einer Fluidprobe auf. Damit kann auf besonders zuverlässige Weise eine berührungslose Probenahme mittels des Probenahmekopfes erfolgen, da durch den Trichter immer eine ausreichend große Menge einer Fluidprobe aus dem Inneren des Behälters anhand des Trichters "gesammelt" werden kann und der Analyseeinrichtung zugeführt werden kann.

Gemäß einer weiteren vorteilhaften Weiterbildung ist die Einbringvorrichtung im Probenahmekopf angeordnet, insbesondere in einem trichterförmigen Bereich des Probenahmekopfes. Damit kann der Probenahmekopf einteilig und insbesondere kompakt ausgebildet werden. Ist die Einbringvorrichtung seitlich, also nicht zentral im Probenahmekopf angeordnet, wird damit ein ellipsenähnlicher Wirbel, beispielsweise von Luft, in einer Flasche erzeugt, sodass gegebenenfalls vorhandene Luftschichten vermischt werden. Fremdstoffe in der Luft aus unteren Schichten gelangen so in den Bereich der Öffnung der Flasche und können so mittels des Probenahmekopfes zur Analyseeinrichtung transportiert werden. Insgesamt wird damit die Genauigkeit der Analyse und Zuverlässigkeit der Entnahme der Fluidprobe verbessert.

Gemäß einer weiteren vorteilhaften Weiterbildung weist die Entnahmevorrichtung eine Bewegungseinrichtung für den Probenahmekopf auf, wobei die Bewegungseinrichtung ausgebildet ist, den Probenahmekopf über eine definierte Strecke parallel zu der Bewegungsrichtung eines Behälters in der Entnahmeentfernung zu bewegen. Auf diese Weise wird zum einen eine besonders zuverlässige Entnahme einer Fluidprobe ermöglicht, gleichzeitig baut die Entnahmevorrichtung oberhalb des Probenahmekopfes kompakt.

Gemäß einer weiteren vorteilhaften Weiterbildung weist die Bewegungseinrichtung eine Spule, insbesondere eine Tauchspule und einen Magneten, insbesondere einen Permanentmagneten auf, die miteinander zur horizontalen Bewegung des Probenahmekopfes zusammenwirken. Dies ermöglicht eine kostengünstige Bereitstellung einer Bewegungseinrichtung.

Gemäß einer weiteren vorteilhaften Weiterbildung weist die Entnahmevorrichtung eine Bewegungseinrichtung für den Probenahmekopf auf, wobei mittels der Bewegungseinrichtung der Probenahmekopf periodisch auf- und abbewegbar ist, insbesondere wobei die Bewegungseinrichtung eine Zahnradanordnung aufweist. Damit kann der Bauraum für die Entnahmevorrichtung in horizontaler Richtung kompakt bereitgestellt werden. Gleichzeitig ist die Entnahmevorrichtung einfacher auf unterschiedliche Behälterhöhen anpassbar.

Gemäß einer weiteren vorteilhaften Weiterbildung ist der Probenahmekopf entlang einer geschlossenen Führungslinie insbesondere rollengeführt. Vorteil hiervon ist eine einfache und gleichzeitig zuverlässige Führung des Probenahmekopfs der Entnahmeeinrichtung.

Gemäß einer weiteren vorteilhaften Weiterbildung weist die Entnahmevorrichtung eine Bewegungseinrichtung für den Probenahmekopf auf, wobei die Bewegungseinrichtung ausgebildet ist, den Probenahmekopf pendelförmig zu bewegen. Auf diese Weise kann eine einfache Hin- und Weg- sowie Rückführbewegung des Probenahmekopfs bereitgestellt werden und damit ein besonders einfacher Aufbau der Entnahmeeinrichtung bereitgestellt werden.

Gemäß einer weiteren vorteilhaften Weiterbildung umfasst die Analysevorrichtung ein Spektrometer und eine Messzelle. Damit kann auf einfache Weise eine spektroskopische Analyse der Fluidprobe erfolgen.

Gemäß einer weiteren vorteilhaften Weiterbildung stellt die Messzelle eine optische Weglänge von mindestens 5 m, vorzugsweise mindestens 6 m bereit. Damit wird die Sensitivität erhöht und die Zuverlässigkeit der Detektion von Fremdstoffen in der Fluidprobe wesentlich verbessert. Mittels Multi- oder Mehrfachreflexion, beispielsweise durch den Einsatz einer sogenannten White-Zelle, kann damit eine größere optische Weglänge eines Messstrahls erreicht werden, sodass damit auch Fluidproben von kleinen Flaschenvolumina untersucht werden können, trotz kleinem Bauraum der Messzelle. Mit einem einzigen Strahl, also ohne Multireflexion, ist beispielsweise eine optische Weglänge von 6m nicht möglich.

Gemäß einer weiteren vorteilhaften Weiterbildung weist das Spektrometer ein UV-Absorptionsspektrometer auf, welches in einem Wellenlängenbereich zwischen 150 nm und 500 nm, vorzugsweise zwischen 190 nm und 400 nm betreibbar ist. Vorteil hiervon ist, dass damit eine hohe Genauigkeit bei der Detektion der Fremdstoffe erreicht wird.

Gemäß einer weiteren vorteilhaften Weiterbildung ist das Spektrometer in einem Wellenlängenbereich zwischen 150 nm und 1100 nm, vorzugsweise zwischen 190 nm und 400 nm betreibbar. Damit wird eine noch höhere Genauigkeit bei der Detektion der Fremdstoffe erreicht.

Gemäß einer weiteren vorteilhaften Weiterbildung ist die Analysevorrichtung ausgebildet, insbesondere regelmäßige Messungen an einem Referenzfluid, insbesondere in Form eines Gases, vorzugsweise Stickstoff, durchzuführen, eventuelle Abweichungen von einem vorgegebenen Referenzergebnis zu ermitteln und die Abweichungen bei weiteren Messungen an Fluidproben insbesondere automatisch zu kompensieren. Damit können unvermeidliche Driften automatisch kompensiert werden, sodass eine hohe Langzeitstabilität, eine hohe Sensitivität und hohe Messgenauigkeit über die Zeit bereitgestellt werden können. Als Referenzfluid können beispielsweise die folgenden Gasgemische verwendet werden: a) Gemisch aus SO₂N38 (10 Vol. ppm), Propan N25 (40 Vol. ppm), Stickstoff N50 (Rest) und/oder b) Gemisch aus NH₃ N38 (10 Mol-ppm) und N₂ (Rest).

Gemäß einer weiteren vorteilhaften Weiterbildung des Verfahrens umfasst das Analysieren das Ermitteln der jeweiligen Konzentration und/oder Menge eines identifizierten Fremdstoffs, insbesondere wobei eine kontinuierliche Überwachung der ermittelten Konzentration und/oder Menge eines jeden Behälters innerhalb der Zeitdauer seiner Analyse erfolgt. Zum einen kann damit eine genaue Aussage über die Menge und Konzentration des identifizierten Fremdstoffs erhalten werden, zum anderen kann, wenn die ermittelte Menge und/oder Konzentration festgestellt werden, auch der sogenannte "Memory-Effekt" vermieden werden: Für spezielle Flaschen, die hohe Konzentrationen von Fremdstoffen aufweisen, zum Beispiel von Benzin, Diesel etc., vor allem solche, die noch davon Restflüssigkeiten enthalten, besteht die Möglichkeit, dass die Probenahme auch bei den nachfolgenden Behältern durch hohe Fluidkonzentrationen kontaminiert ist. Folge hiervon ist, dass weitere in der Regel nicht mit Fremdstoffen kontaminierte, also "gute" Behälter auch als mit Fremdstoffen belastet und damit als aussortierende Behälter detektiert werden. Dies kann zu großen wirtschaftlichen Behälterverlusten führen.

Gemäß einer weiteren vorteilhaften Weiterbildung wird zusätzlich eine Spektralanalyse mittels Infrarot- und/oder Mikrowellen-Spektroskopie durchgeführt und /oder ein zusätzliches Analysieren mittels eines Restflüssigkeitsanalysators und/oder mittels eines Pulsfluoreszenzsystems. Es ist dabei möglich, zum einen die Genauigkeit der Analyse insgesamt zu erhöhen, gleichzeitig auch noch weitere Fremdstoffe zuverlässig zu erfassen.

Weitere wichtige Merkmale und Vorteile der Erfindung ergeben sich aus den Unteransprüchen, aus den Zeichnungen, und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

In den Figuren zeigen
- Fig. 1: in schematischer Form eine Darstellung einer Vorrichtung gemäß einer Ausführungsform der vorliegenden Erfindung;
- Fig. 2: in schematischer Form eine Darstellung einer Vorrichtung gemäß einer Ausführungsform der vorliegenden Erfindung;
- Fig. 3a-d: verschiedene Zustände einer Vorrichtung gemäß einer Ausführungs-form der vorliegenden Erfindung;
- Fig. 4: mittels einer Vorrichtung gemäß einer Ausführungsform gemessene Spektren dreier möglicher Fremdstoffe;
- Fig. 5: Schritte eines Verfahrens gemäß einer Ausführungsform der vorliegenden Erfindung; und
- Fig. 6: ein mittels einer Vorrichtung gemäß einer Ausführungsform der vorlie-genden Erfindung gemessenes Spektrum von Benzol als Fremdstoff.

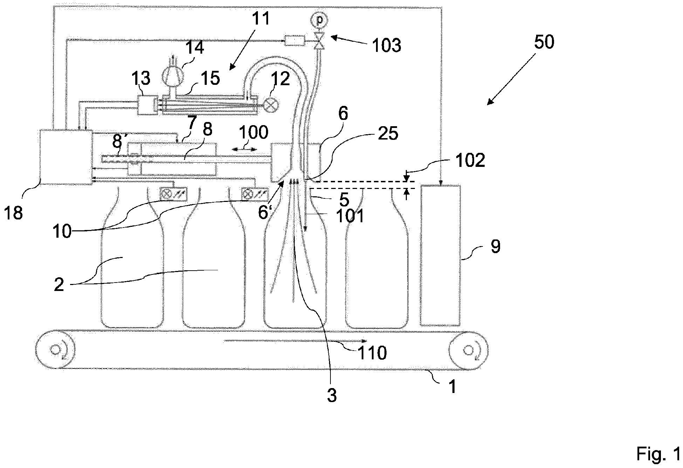

Figur 1 zeigt in schematischer Form eine Darstellung einer Vorrichtung gemäß einer Ausführungsform der vorliegenden Erfindung.

In Figur 1 ist eine Vorrichtung 50 zur Detektion von Fluiden in Behältern 2 gezeigt. Die Vorrichtung 50 umfasst dabei eine Fördereinrichtung 1 mit horizontaler Förderrichtung 110, die Flaschen 2 aufrecht auf einem Band - in Figur 1 von links nach rechts - befördert. Die Fördereinrichtung 1 kann jedoch auch als kreisförmiger Rundlauf ausgebildet sein oder eine beliebige Kurvenform, beispielsweise in einer Getränkeabfülllinie, aufweisen. Die Fördereinrichtung 1 kann mit variablen einstellbaren Geschwindigkeiten bei Transportleistungen bis zu 40.000-50.000 Flaschen pro Stunde betrieben werden. Zur Erkennung der Position von Flaschen 2 sind mehrere Lichtschranken 10 angeordnet. Am rechten Ende der Fördereinrichtung 50 ist eine Aussortiereinrichtung beziehungsweise Pushereinrichtung 9 angeordnet. Die Pushereinrichtung 9 sorgt dafür, dass kontaminierte Flaschen 2 vom Band der Fördereinrichtung 1 gestoßen, geschoben oder stehend ausgeleitet und in dafür speziell bereitgestellte Behälter abgezweigt werden.

Weiterhin umfasst die Vorrichtung 50 ein Analyseeinrichtung 11, umfassend eine Lichtquelle 12, die in eine Messzelle 15 einstrahlt und ein Sensorarray 13, das die aus der Messezelle 15 austretende Strahlung detektiert. Zum Transport der Fluidprobe in die Messzelle 15 ist weiter eine Vakuumpumpe 14 angeordnet. Die Messzelle 15 ist weiterhin über eine oder mehrere Leitungen mit einem nach unten offenen Probenahmekopf 6 verbunden, dessen Öffnung trichterförmig (Bezugszeichen 6') ausgebildet ist.

Lichtquelle 12, Messzelle 15 und Sensorarray 13 der Analyseeinrichtung 11 bilden hier ein UV-Absorptionsspektrometer, welches im Wellenlängenbereich zwischen 190 nm und 400 nm arbeitet. In einer weiteren Ausführungsform ist der Spektralbereich des UV-Spektrometers bis auf 1050 nm, das heißt auf den sichtbaren und nahen Infrarot-Bereich, insbesondere lückenlos ausgedehnt. Das Spektrometer kann als optisches UV-Spektrometer mit Gitter-Dispersion der optischen Strahlung und mit arrayförmig in einer Linie angeordneten Si-Sensoren 13 der Anzahl beispielsweise von 256 Pixel-Elementen oder dergleichen ausgeführt sein. Als Lichtquelle 12 können Xenon- und/oder Deuterium-Strahler verwendet werden. Zur Steigerung der Sensitivität wird eine optische Langwegzelle als Messzelle 15 eingesetzt, die durch Erhöhung der optischen Weglänge durch Vielfachreflexion auf 0,2 m bis 1 m, insbesondere sogar mehr als 5 m und bis zu 6 m Nachweisgrenzen im ppb- beziehungsweise ppt-Bereich erreicht. Eine Messzelle kann beispielsweise zur Einkopplung und Auskopplung Paraboloidspiegel und zur Reflexion entsprechende Hohlspiegel aufweisen. Durch periodische Messung der Spektren bei nicht absorbierendem Referenzgas, zum Beispiel mit Stickstoff, N₂, können auch leichteste, unvermeidliche Driften automatisch kompensiert werden, so dass Langzeitstabilitäten, Sensitivität sowie Messgenauigkeit mit hoher Präzision "online" prozesstechnisch realisiert werden können. Es ist damit möglich, eine hochauflösende Spektroskopie mit einer spektralen Differenzierung und einem spektralen Auflösungsvermögen im Nanometerbereich bereitzustellen.

Im Probenahmekopf 6 ist außerhalb der Mitte, also seitlich, ein Einblasnippel 25 angeordnet, der über eine Leitung mit einer Druckluftpumpe oder einem Druckluftspeicher mit Druckluftmagnetventil - Bezugszeichen 103 - verbunden ist, sodass Druckluft, beispielsweise ein kurzer Druckluftstoß oder -impuls in die Behälter 2 eingeblasen beziehungsweise injiziert werden kann, wenn sich der Probenahmekopf 6 in einem definierten konstanten, möglichst minimalen Abstand 102 zwischen Unterkante des Probenahmekopfes 2 und Öffnung 5 des Behälters 2 befindet. Dadurch tritt Fluid aus der Flasche 2 über die Öffnung 5 aus und diese Fluidprobe wird mittels des Probenahmekopfes 6 der Analyseeinrichtung 11 zur Analyse auf Fremdstoffe zugeführt. Durch den seitlich angeordneten Einblasnippel 25 wird ein ellipsenähnlicher Wirbel, beispielsweise von Luft, in einer Flasche erzeugt, sodass gegebenenfalls vorhandene Luftschichten vermischt werden. Fremdstoffe in der Luft aus unteren Schichten gelangen so in den Bereich der Öffnung der Flasche und können so mittels des Probenahmekopfes zur Analyseeinrichtung 11 transportiert werden. Insgesamt wird damit die Genauigkeit der Analyse und Zuverlässigkeit der Entnahme der Fluidprobe verbessert.

Der Probenahmekopf 6 ist parallel zur Förderrichtung 110 der Flaschen 2 mittels einer Bewegungseinrichtung, umfassend eine Tauchspule 7 und einen zumindest teilweise als Permanentmagnet 8' ausgebildeten Schieber 8, der mit dem Probenahmekopf 6 verbunden ist, horizontal periodisch hin und her verschiebbar (Bezugszeichen 100), um einen möglichst zeitlangen Verbleib des Probenahmekopfes 6 im Bereich der Öffnung 5 der Flasche 2 zu ermöglichen. Die Tauchspule 7, deren Permanentmagnet 8' bewegt wird, ist hier ortsfest. Es ist aber ebenfalls eine Ausführungsform denkbar mit einer bewegten Tauchspule 7, deren Permanentmagnet 8' ortsfest ist. Die Positionen sowie die Geschwindigkeiten und die jeweilige Richtung des beweglichen Schiebers 8 werden hier über zwei Lichtschranken 10 gesteuert beziehungsweise geregelt.

Die Analysevorrichtung 11, die Bewegungseinrichtung 7, 8, 8', die Lichtschranken 10, die Pushereinrichtung 9 und die Druckluftpumpe 103 sind jeweils mit einer Steuereinrichtung 18 zur koordinierten Steuerung der genannten Komponenten verbunden. Die Regelung/Steuerung der Bewegungseinrichtung 7, 8, 8' der Vorrichtung 50 erfolgt mittels der Steuereinrichtung 18 derart, dass eine möglichst lange Gasprobennahmezeit mittels der kegelförmigen Absaugung des Probenahmekopfes 6 pro Flasche 2 resultiert, wohingegen die restliche Zeit zur Bewegung hin und weg von der Flasche 2 möglichst kurzgehalten wird, indem die Regelung der Geschwindigkeit des Schiebers 8 diesbezüglich optimiert wird.

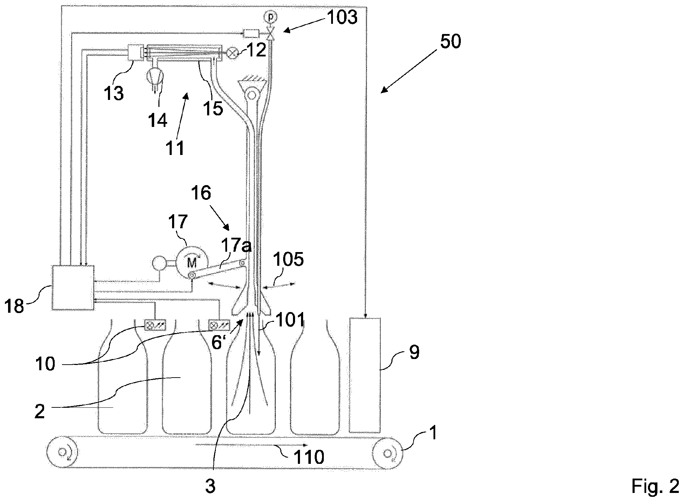

Figur 2 zeigt in schematischer Form eine Darstellung einer Vorrichtung gemäß einer Ausführungsform der vorliegenden Erfindung.

In Figur 2 ist im Wesentlichen eine Vorrichtung 50 gemäß Figur 1 gezeigt. Im Unterschied zur Vorrichtung 50 gemäß Figur 1 umfasst die Vorrichtung 50 gemäß Figur 2 einen mittels einer Pendeleinrichtung 16 pendelförmig (Bezugszeichen 105) bewegbaren Probenahmekopf 6. Hierzu ist der Probenahmekopf 6 über eine Verbindung 17a und einem Motor 17 verbunden. Mit anderen Worten wird beispielsweise ein geregelter Servomotor 17 verwendet, um eine gleichförmige Pendelbewegung 105 des Probenahmekopfes 6 zu ermöglichen. Hierbei kann der Servomotor 17 derart geregelt sein, dass der Probenahmekopf 6 eine Bewegung mit abruptem Rücksprung in einer dachförmigen, stetigen, monoton fallenden Bahnkurve und beschleunigtem/verzögerten Bewegungsablauf bereitstellt.

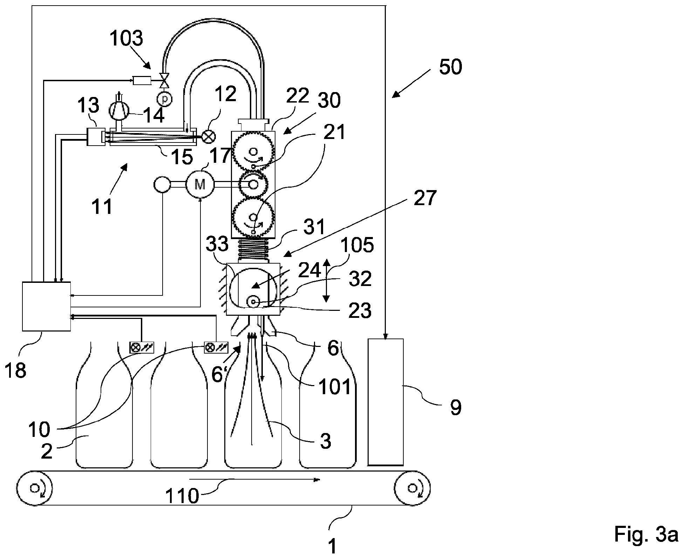

Die Figuren 3a-d zeigen verschiedene Zustände einer Vorrichtung gemäß einer Ausführungsform der vorliegenden Erfindung.

In den Figuren 3a-3d sind verschiedene Zustände einer Vorrichtung 50 gemäß einer Ausführungsform der vorliegenden Erfindung gezeigt. Die Vorrichtung 50 gemäß den Figuren 3a-3b zeigt im Wesentlichen denselben Aufbau wie die Vorrichtung 50 gemäß Figur 1. Im Unterschied zu der Vorrichtung 50 gemäß Figur 1 umfasst die Vorrichtung 50 gemäß der Figuren 3a-d eine Bewegungseinrichtung, die eine in Richtung der Flaschenachse über einen Servomotor 17 periodische Auf- und Abwärtsbewegung des Probenahmekopfes 6 bereitstellt. Die Vertikalbewegung 105 wird durch drei mit zwei Stiften 21 versehene, insbesondere auf einem Block 22 angeordnete Zahnräder einer Zahnrad-Anordnung 30 erreicht. Der Block 22 ist über die Stifte 21 mit der Zahnradanordnung 30 verbunden. Der vertikal bewegbare Teil 27 trägt dabei insbesondere den Probenahmekopf 6 und ist relativ zu dem Block 22 beweglich und über eine Federeinrichtung (nicht gezeigt) vorgespannt. Im Bereich des Probenahmekopfes 6 greift eine Rolle 32 in eine geschlossene Führungskurve 33 ein. Die Führungskurve 33 ist im Wesentlichen kreisförmig ausgebildet, ist jedoch im unteren Bereich insbesondere abgeflacht, sodass eine mechanische Begrenzungsebene 23 an der Unterkante 24 des mittels einer Feder 31 abgefederten Probenahmekopfes 6 definiert wird, die die minimale Abstandsdifferenz zwischen Flasche 2 und Einblasnippel 25 sowie zwischen Flasche 2 und Absaugkegel beziehungsweise -trichter 6' des Probenahmekopfes 6 bereitstellt. Mittels der Feder 31 wird die Anlage der Rolle 32 während ihrer gesamten Bewegung entlang der Führungskurve 33 an dieser bereitgestellt. Die Führungskurve 33 wird dabei entgegen dem Uhrzeigersinn durchlaufen, sodass der Probenahmekopf 6 an der unteren Begrenzungsebene 23 im Wesentlichen parallel zu und in Förderrichtung 110 der Flaschen 2 bewegt wird. Der bewegliche Teil 27 bewegt sich durch die Verbindung mit dem Probenahmekopf 6 ebenfalls entlang der Führungskurve 33.

In den Figuren 3a-3d sind vier Höhenpositionen der beweglichen Anordnung beispielhaft skizziert. Figur 3a zeigt hierbei die Anlage der Rolle 32 an der Begrenzungsebene 23, der Probenahmekopf 6 befindet sich somit in der Entnahmeposition für die Entnahme einer Fluidprobe aus der Flasche 2. Wie vorstehend beschrieben wird dann Druckluft über den außermittig im Probenahmekopf 6 angeordneten Einblasnippel 25 in die Flasche 2 eingeblasen und mittels der Vakuumpumpe 14 wird eine Fluidprobe zur Analyseeinrichtung 11 transportiert.

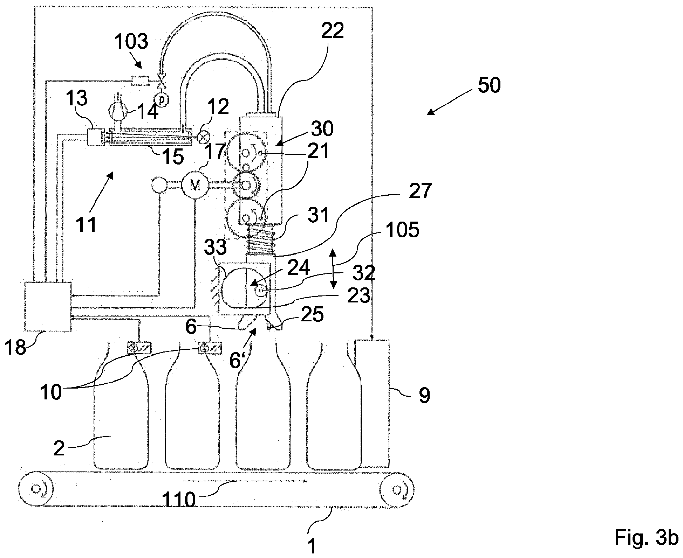

Figur 3b zeigt nun das Anheben des Probenahmekopfs 6 nachdem eine Fluidprobe aus der Flasche 2 entnommen wurde. Die Rolle 32 stützt sich dabei seitlich an der Führungskurve 33 ab und läuft entlang dieser entgegen dem Uhrzeigersinn nach oben. Die Geschwindigkeit des Probenahmekopfs 6 entlang der Führungskurve 33 ist dabei mit der Geschwindigkeit des Förderbands 1 synchronisiert, insbesondere mittels der beiden Lichtschranken 10.

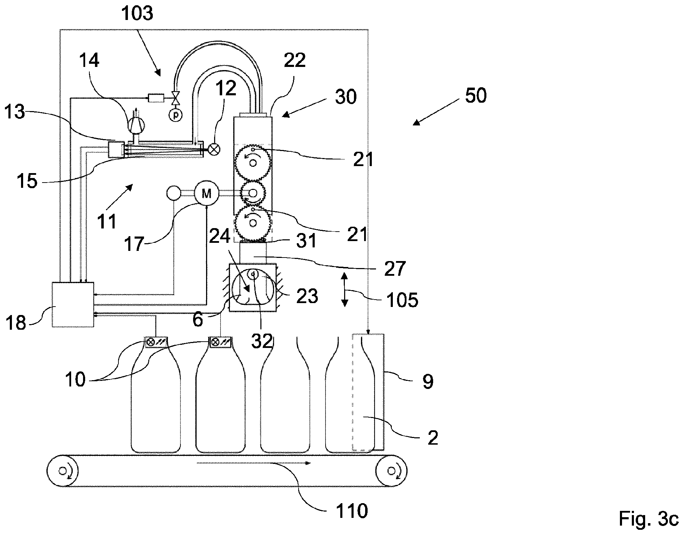

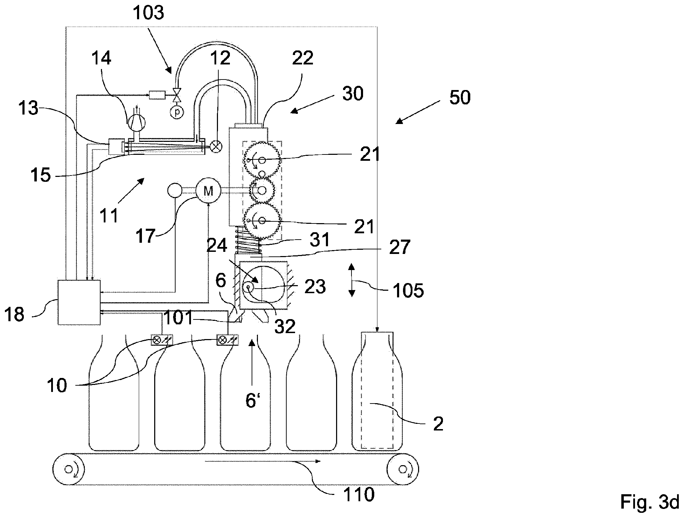

Figur 3c zeigt die oberste Lage des Probenahmekopfes 6, die im Wesentlichen zu dem halben Abstand zwischen zwei aufeinanderfolgenden Behältern korrespondiert. Figur 3d zeigt nun das Wiederabsenken des Probenahmekopfes 6 zum Entnehmen einer Fluidprobe aus dem nachfolgenden Behälter 2. Anschließend wird wieder eine Fluidprobe in der Position gemäß Figur 3a entnommen und der Probenahmekopf 6 wird wieder gemäß den Figuren 3b-d verfahren.

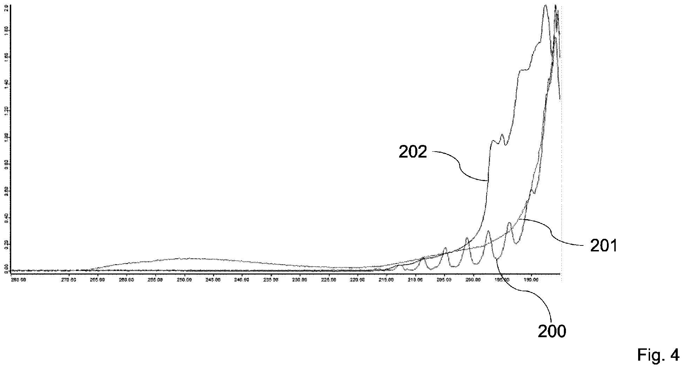

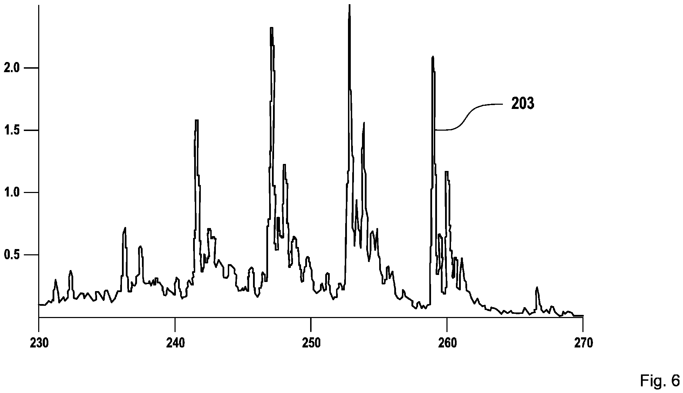

Figur 4 zeigt mittels einer Vorrichtung gemäß einer Ausführungsform der vorliegenden Erfindung gemessenen Spektren dreier möglicher Fremdstoffe, Figur 6 ein mittels einer Vorrichtung gemäß einer Ausführungsform der vorliegenden Erfindung gemessenes Spektrum von Benzol als Fremdstoff.

In Figur 4 sind drei Kurven 200, 201 und 202, in Figur 6 eine Kurve 203 gezeigt, die eine gemessene Extinktion/Absorbance in Abhängigkeit einer Wellenlänge zeigen. Die Extinktion ist hierbei in beliebiger Einheit, die Wellenlänge in nm angegeben. Die Extinktion wird hierbei gemäß der Formel log(I₀/I) erhalten, wobei die Intensität I₀ die Lichtintensität bei Eintritt in die Messzelle bei der entsprechenden Wellenlänge in nm wiedergibt, die Intensität I die gemessene Intensität bei Austritt aus der Messzelle bei der entsprechenden Wellenlänge in nm.

Die Kurve 200 repräsentiert den Verlauf von NH₃, die Kurve 201 repräsentiert den Verlauf von Benzin E10, die Kurve 202 repräsentiert den Verlauf von Toluol und die Kurve 203 repräsentiert den Verlauf von Benzol.

Klar zu erkennen sind die unterschiedlichen Verläufe der Kurven 200-203, die eine selektive und genaue Differenzierung der Fremdstoffe 200-203 anhand des Kurvenverlaufs ermöglichen. Werden beispielsweise im Vorfeld charakteristische Kurvenverläufe, sogenannte Fingerprints, für eine Vielzahl von Stoffen hinterlegt, kann durch Vergleich eine eindeutige Identifikation vorgenommen werden. Sind mehrere Fremdstoffe beteiligt, kann es ausreichend sein, lediglich einen Fremdstoff zuverlässig zu erkennen, da dann der Behälter bereits entsprechend aussortiert werden muss. Sollen mehrere oder alle Fremdstoffe identifiziert werden, kann dies durch multivariate Methoden, beispielsweise verallgemeinerte lineare Regression oder mittels neuronaler Netze, erfolgen.

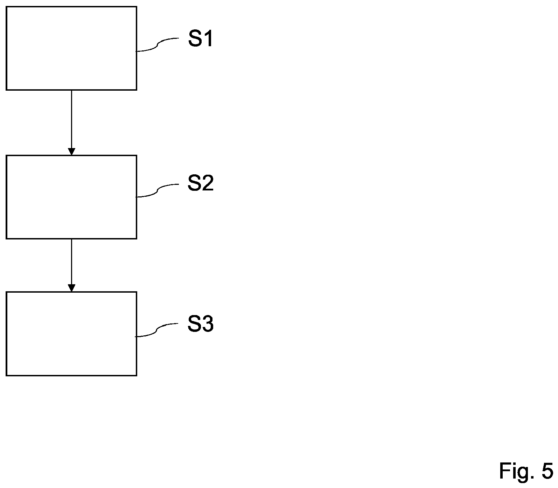

Figur 5 zeigt Schritte eines Verfahrens gemäß einer Ausführungsform der vorliegenden Erfindung.

In Figur 5 sind Schritte eines Verfahrens zum Untersuchen von Behältern auf Fremdstoffe gezeigt. Das Verfahren umfasst dabei die Schritte:
In einem ersten Schritt S1 erfolgt ein Einbringen eines Neutralfluids in den zumindest einen Behälter mittels einer Einbringeinrichtung.

In einem weiteren Schritt S2 erfolgt ein Entnehmen einer Fluidprobe aus dem zumindest einen Behälter mittels einer Entnahmevorrichtung, derart, dass der Probenahmekopf kontaktlos in eine definierte Entnahmeentfernung zu einer Öffnung des zumindest einen Behälters gebracht wird.

In einem weiteren Schritt S3 erfolgt ein Analysieren der mittels der Entnahmeeinrichtung aus dem zumindest einen Behälter entnommenen Fluidprobe zumindest mittels UV-Spektroskopie auf Fremdstoffe mittels einer Analyseeinrichtung.

Zusammenfassend weist die vorliegende Erfindung den Vorteil auf, dass die Zuverlässigkeit bei der Erkennung von Fremdstoffen wesentlich erhöht wird. Darüber hinaus werden ein kostengünstiger und einfacher Aufbau und ein zuverlässiger Betrieb ermöglicht. Weiterhin kann durch die berührungslose Probenahme ein Verschleiß des sonst üblicherweise verwendeten Dichtkörpers zum direkten Aufsetzen des Probenahmekopfs vermieden werden.

Obwohl die vorliegende Erfindung anhand bevorzugter Ausführungsbeispiele beschrieben wurde, ist sie nicht darauf beschränkt, sondern auf vielfältige Weise modifizierbar.

### Bezugszeichenliste

- 1: Fördereinrichtung
- 2: Flasche
- 3: Gasprobe

- 5: Flaschenöffnung
- 6: Probenahmekopf
- 6': Öffnung Probenahmekopf/Absaugkegel/ Absaugtrichter

- 7: Tauchspule/Linearantrieb, insbesondere elektrisch
- 8: Schieber
- 8': Permanentmagnet
- 9: Pushereinrichtung
- 10: Lichtschranke
- 11: Analyseeinrichtung
- 12: Lichtquelle
- 13: Sensorarray
- 14: Vakuumpumpe
- 15: Messzelle
- 16: Pendeleinrichtung
- 17: Motor
- 17a: Verbindung
- 18: Steuereinrichtung

- 21: Stift
- 22: Block
- 23: Begrenzungsebene
- 24: Unterkante Probenahmekopf
- 25: Einblasnippel

- 27: Beweglicher Teil
- 30: Zahnradanordnung
- 31: Feder
- 32: Rolle
- 33: Führungskurve

- 50: Fördereinrichtung

- 100: Bewegungsrichtung Schieber
- 101: Luftstoss
- 102: Abstand
- 103: Druckluftpumpe; Druckluftspeicher mit Druckluftmagnetventil
- 105: Pendelbewegung
- 110: Horizontale Fördereinrichtung

- 200: Intensitätsverlauf Spektrum NH₃
- 201: Intensitätsverlauf Spektrum Benzin E10
- 202: Intensitätsverlauf Spektrum Toluol

- S1-S3: Schritte eines Verfahrens

## Patentansprüche

1. Vorrichtung zum Untersuchen von Behältern auf Fremdstoffe, umfassend
eine Einbringeinrichtung (103) zum Einbringen eines Neutralfluids in den Behälter (2),
eine Entnahmeeinrichtung (6, 14) zur Entnahme einer Fluidprobe aus zumindest einem Behälter (2), wobei die Entnahmeeinrichtung (6, 14) einen Probenahmekopf (6) aufweist, wobei der Probenahmekopf (6) kontaktlos in eine definierte Entnahmeentfernung (102) zu einer Öffnung (5) des zumindest einen Behälters (2) bringbar ist, und
eine Analyseeinrichtung (11), die mit der Entnahmeeinrichtung (6, 14) verbunden ist, und die ausgebildet ist, die mittels der Entnahmeeinrichtung (6, 14) aus dem zumindest einen Behälter (2) entnommene Fluidprobe zumindest mittels UV-Spektroskopie auf Fremdstoffe zu analysieren, vorzugsweise wobei
eine Fördereinrichtung (50) für die Behälter (2) angeordnet ist, derart, dass die Bewegung des Probenahmekopfes (6) und die Bewegung der Behälter (2) miteinander synchronisiert sind.

2. Vorrichtung gemäß Anspruch 1, **dadurch gekennzeichnet, dass** die Einbringeinrichtung (103) ausgebildet ist, das Neutralfluid in Form eines Gases oder Gasgemisches, insbesondere in Form von Luft bereitzustellen.

3. Vorrichtung gemäß einem der Ansprüche 1-2, **dadurch gekennzeichnet, dass** eine Sortiereinrichtung (9, 18) angeordnet ist, die ausgebildet ist, anhand eines Resultats der Analyseeinrichtung Behälter (2) abweichend von einem vorab definierten Resultat auszusortieren, vorzugsweise wobei
die Sortiereinrichtung (9, 18) ausgebildet ist, die Behälter (2) zumindest einmal erneut der Untersuchung auf Fremdstoffe zuzuführen.

4. Vorrichtung gemäß einem der Ansprüche 1-3, **dadurch gekennzeichnet, dass** mehrere Behälter (2) gleichzeitig untersuchbar und die jeweilige Fluidproben unterschiedlicher Behälter (2) gleichzeitig analysierbar sind.

5. Vorrichtung gemäß einem der Ansprüche 1-4, **dadurch gekennzeichnet, dass** der Probenahmekopf (6) einen kegelförmigen Trichter (6') zur Aufnahme einer Fluidprobe aufweist.

6. Vorrichtung gemäß einem der Ansprüche 1-5, **dadurch gekennzeichnet, dass** die Einbringvorrichtung (103) im Probenahmekopf (6) angeordnet ist, insbesondere in einem trichterförmigen Bereich des Probenahmekopfs (6').

7. Vorrichtung gemäß Anspruch 1, **dadurch gekennzeichnet, dass** die Entnahmevorrichtung (6, 14) eine Bewegungseinrichtung (7, 8, 8', 17, 17a) für den Probenahmekopf (6) aufweist, wobei die Bewegungseinrichtung (7, 8, 8', 17, 17a) ausgebildet ist, den Probenahmekopf (6) über eine definierte Strecke parallel zu der Bewegungsrichtung (7, 8, 8', 17, 17a) eines Behälters (2) in der Entnahmeentfernung (102) zu bewegen, vorzugsweise wobei
die Bewegungseinrichtung (7, 8, 8', 17, 17a) eine Spule (7), insbesondere eine Tauchspule und einen Magneten (8'), insbesondere einen Permanentmagneten aufweist, die miteinander zur horizontalen Bewegung des Probenahmekopfs (6) zusammenwirken.

8. Vorrichtung gemäß Anspruch 1, **dadurch gekennzeichnet, dass** die Entnahmevorrichtung (6, 14) eine Bewegungseinrichtung (7, 8, 8', 17, 17a) für den Probenahmekopf (6) aufweist, wobei mittels der Bewegungseinrichtung (7, 8, 8', 17, 17a) der Probenahmekopf (6) periodisch auf- und abbewegbar ist, insbesondere wobei die Bewegungseinrichtung (7, 8, 8', 17, 17a) eine Zahnradanordnung (30) aufweist, vorzugsweise wobei
der Probenahmekopf (6) entlang einer geschlossenen Führungslinie (33) insbesondere rollengeführt ist.

9. Vorrichtung gemäß Anspruch 1, **dadurch gekennzeichnet, dass** die Entnahmevorrichtung (6, 14) eine Bewegungseinrichtung (7, 8, 8', 17, 17a) für den Probenahmekopf (6) aufweist, wobei die Bewegungseinrichtung (7, 8, 8', 17, 17a) ausgebildet ist, den Probenahmekopf (6) pendelförmig (105) zu bewegen.

10. Vorrichtung gemäß einem der Ansprüche 1-9, **dadurch gekennzeichnet, dass** die Analysevorrichtung (11), ein Spektrometer (12, 13) und eine Messzelle (15) umfasst, vorzugsweise wobei
die Messzelle (15) eine optische Weglänge von mindestens 5 m, vorzugsweise mindestens 6 m bereitstellt.

11. Vorrichtung gemäß Anspruch 10, **dadurch gekennzeichnet, dass** das Spektrometer (12, 13) ein UV-Absorptionsspektrometer aufweist, welches in einem Wellenlängenbereich zwischen 150 nm und 500 nm, vorzugsweise zwischen 190 nm und 400 nm betreibbar ist.

12. Vorrichtung gemäß einem der Ansprüche 10-11, **dadurch gekennzeichnet, dass** das Spektrometer (12) in einem Wellenlängenbereich zwischen 150 nm und 1100 nm, vorzugsweise zwischen 190 nm und 400 nm betreibbar ist.

13. Vorrichtung gemäß einem der Ansprüche 10-12, **dadurch gekennzeichnet, dass** die Analysevorrichtung (11) ausgebildet ist, insbesondere regelmäßige Messungen an einem Referenzfluid, insbesondere in Form eines Gases, vorzugsweise Stickstoff, durchzuführen, eventuelle Abweichungen von einem vorgegebenen Referenzergebnis zu ermitteln und die Abweichungen bei weiteren Messungen an Fluidproben zu kompensieren.

14. Verfahren zum Untersuchen von Behältern auf Fremdstoffe, umfassend die Schritte
- Einbringen (S1) eines Neutralfluids in den zumindest einen Behälter (2) mittels einer Einbringeinrichtung (103),
- Entnehmen (S2) einer Fluidprobe aus dem zumindest einen Behälter (2) mittels einer Entnahmevorrichtung (6, 14), derart, dass der Probenahmekopf (6) kontaktlos in eine definierte Entnahmeentfernung (102) zu einer Öffnung (5) des zumindest einen Behälters (2) gebracht wird, und
- Analysieren (S3) der mittels der Entnahmeeinrichtung (6, 14) aus dem zumindest einen Behälter (2) entnommenen Fluidprobe zumindest mittels UV-Spektroskopie auf Fremdstoffe mittels einer Analyseeinrichtung (11).

15. Verfahren gemäß Anspruch 14, **dadurch gekennzeichnet, dass** das Analysieren das Ermitteln der jeweiligen Konzentration und/oder Menge eines identifizierten Fremdstoffs umfasst, insbesondere wobei eine kontinuierliche Überwachung der ermittelten Konzentration und/oder Menge eines jeden Behälters innerhalb der Zeitdauer seiner Analyse erfolgt.
